# EUROPÄISCHE PATENTSCHRIFT

(11) **EP 2 748 485 B1**
(45) Veröffentlichungstag und Bekanntmachung des Hinweises auf die Patenterteilung: **21.09.2016**
(21) Anmeldenummer: 12759629.4
(22) Anmeldetag: 26.07.2012
(51) Int. Cl.: F16F 15/139

(54) **DREHMOMENTÜBERTRAGUNGSEINRICHTUNG**
TORQUE TRANSMISSION DEVICE
DISPOSITIF DE TRANSMISSION DE COUPLE DE ROTATION

(30) Priorität: 23.08.2011 DE 102011081361
(43) Veröffentlichungstag der Anmeldung: 02.07.2014
(73) Patentinhaber: Schaeffler Technologies AG & Co. KG, 91074 Herzogenaurach (DE)
(72) Erfinder: FENDER-OBERLE, Vincent, 67150 Erstein-Krafft (FR); MENDE, Hartmut, 77815 Bühl (DE); JUNKER, Uli, 77652 Offenburg (DE)
(86) Internationale Anmeldenummer: PCT/DE2012/000754
(87) Internationale Veröffentlichungsnummer: WO 2013/026432

(56) Entgegenhaltungen:
- US-A- 5 935 008
- US-A1- 2006 185 959
- US-A1- 2010 210 366

## Beschreibung

Die Erfindung betrifft eine Drehmomentübertragungseinrichtung, insbesondere für einen Antriebsstrang eines brennkraftmaschinengetriebenen Kraftfahrzeugs, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung mit wenigstens einem Energiespeicher und einer Reibeinrichtung.

Aus der DE 10 2009 035 916 A1 ist ein Drehschwingungsdämpfer, insbesondere Zweimassenschwungrad, bekannt umfassend eine Primärmasse und eine Sekundärmasse, die über eine Reibeinrichtung bezüglich einer Relativverdrehung zwischen beiden miteinander gekoppelt sind, wobei die Reibeinrichtung ein Stützblech, eine Stützscheibe und eine Tellerfeder umfasst, bei dem die Tellerfeder mehrere Zungen an ihrem Innenumfang aufweist, um die Zentrierung der Reibeinrichtung bei der Montage der Reibeinrichtung zu verbessern.

Gemäß der DE 10 2009 035 916 A1 umfasst das Zweimassenschwungrad eine Primärmasse und eine Sekundärmasse, die relativ zueinander gegen die Kraft einer Bogenfederanordnung verdrehbar sind. Das Zweimassenschwungrad weist eine Rotationsachse auf. Die Sekundärmasse umfasst bogenförmige Ausschnitte, in denen die Bogenfederanordnung gelagert ist. Die Primärmasse weist auf beiden Seiten bogenförmige kanalartige Aufweitungen auf, in denen die Bogenfederanordnung gelegen ist.

Gemäß der DE 10 2009 035 916 A1 dämpft eine Reibeinrichtung die Relativverdrehung zwischen Primärmasse und Sekundärmasse durch trockene Reibung. Die Dämpfungseinrichtung umfasst ein Stützblech, das fest mit der Primärmasse verbunden, beispielsweise vernietet ist, und eine Stützscheibe, die bezüglich einer Drehung um die Rotationsachse gegenüber dem Stützblech festgelegt aber in axialer Richtung gegenüber diesem verschiebbar ist. Zwischen dem Stützblech und der Stützscheibe ist eine Reibsteuerscheibe angeordnet, die mit einer Verzahnung axial verschiebbar und drehfest mit der Sekundärmasse verbunden ist. Die Reibsteuerscheibe ist in flächigem Kontakt mit dem Stützblech und der Stützscheibe, sodass eine Relativverdrehung der Reibsteuerscheibe gegenüber dem Stützblech und der Stützscheibe gegen die trockene Reibung der in Kontakt stehenden Flächen möglich ist. Die Stützscheibe wird durch eine Tellerfeder auf die Reibsteuerscheibe bzw. das Stützblech gedrückt, sodass die Reibsteuerscheibe zwischen dem Stützblech und der Stützscheibe eingeklemmt wird. Finger der Stützscheibe greifen durch korrespondierende Öffnungen des Stützbleches. Ebenso greifen Finger der Tellerfeder durch Öffnungen des Stützbleches.

Weitere Drehmomentübertragungseinrichtungen sind durch die US 5 935 008A, die US 2010/210366A1 und die US 2006/185959A1 bekannt geworden.

Der Erfindung liegt die Aufgabe zugrunde, eine eingangs genannte Drehmomentübertragungseinrichtung mit einem bauraumangepassten und/oder bauraumoptimierten Aufbau bereitzustellen.

Die Lösung der Aufgabe erfolgt mit einer Drehmomentübertragungseinrichtung, insbesondere für einen Antriebsstrang eines brennkraftmaschinengetriebenen Kraftfahrzeugs, aufweisend ein Eingangsteil und ein Ausgangsteil mit einer gemeinsamen Drehachse, um die das Eingangsteil und das Ausgangsteil zusammen drehbar und relativ zueinander begrenzt verdrehbar sind und eine zwischen dem Eingangsteil und dem Ausgangsteil wirksame Feder-Dämpfer-Einrichtung mit wenigstens einem Energiespeicher und einer Reibeinrichtung, bei der die Reibeinrichtung radial außerhalb des wenigstens einen Energiespeichers angeordnet ist.

Bezeichnungen "Eingangsteil" und "Ausgangsteil" sind auf eine von einem Antrieb, wie Brennkraftmaschine, ausgehende Drehmomentflussrichtung bezogen. Die Bezeichnung "radial" ist auf die Drehachse bezogen. Eine radiale Richtung ist dann eine zur Drehachse senkrechte Richtung.

Die Drehmomentübertragungseinrichtung kann ein Drehschwingungsdämpfer sein. Die Drehmomentübertragungseinrichtung kann ein Zweimassenschwungrad sein. Das Eingangsteil der Drehmomentübertragungseinrichtung kann mit einem Ausgangsteil der Brennkraftmaschine, insbesondere mit einer Kurbelwelle, antriebsverbunden sein. Das Ausgangsteil der Drehmomentübertragungseinrichtung kann mit einem Eingangsteil einer Reibungskupplung, insbesondere mit einem Kupplungsgehäuse, antriebsverbunden sein.

Die Feder-Dämpfer-Einrichtung kann eine Federeinrichtung aufweisen. Die Feder-Dämpfer-Einrichtung kann eine Dämpfereinrichtung aufweisen. Die Federeinrichtung und die Dämpfer-einrichtung der Feder-Dämpfer-Einrichtung können parallel geschaltet sein. Die Federeinrichtung kann den wenigstens einen Energiespeicher aufweisen. Die Federeinrichtung kann wenigstens eine Feder aufweisen. Die wenigstens eine Feder der Federeinrichtung kann eine Schraubenfeder sein. Die wenigstens eine Feder der Federeinrichtung kann eine Druckfeder sein. Die wenigstens eine Feder der Federeinrichtung kann eine Bogenfeder sein. Die Federeinrichtung kann mehrere, insbesondere zwei, Federn aufweisen. Die Federn der Federeinrichtung können bogenartig um die Drehachse angeordnet sein. Die Federn der Federeinrichtung können mit einem ersten Radius beabstandet um die Drehachse angeordnet sein. Die Dämpfereinrichtung kann die Reibeinrichtung aufweisen. Die Reibeinrichtung kann ringartig um die Drehachse angeordnet sein. Die Reibeinrichtung kann mit einem zweiten Radius beabstandet um die Drehachse angeordnet sein. Der zweite Radius kann größer sein, als der erste Radius.

Mit der erfindungsgemäßen Drehmomentübertragungseinrichtung ist ein Bauraumbedarf im Bereich der Drehachse verringert. Es ist eine reduzierte Normalkraft oder Anpresskraft an der Reibeinrichtung erforderlich. Eine Flächenpressung an der Reibeinrichtung ist verringert. Die Reibeinrichtung unterliegt einer verringerten Beanspruchung.

Mit dem Ausgangsteil ist ein Pendelmassenträgerteil einer Fliehkraftpendeleinrichtung drehfest verbunden und die Reibeinrichtung ist zwischen dem Eingangsteil und dem Pendelmassenträgerteil wirksam . Das Ausgangsteil kann ein Flanschteil aufweisen. Das Ausgangsteil kann ein Schwungmassenteil aufweisen. Das Schwungmassenteil kann mit dem Flansch-teil des Ausgangsteils fest verbunden sein. Das Schwungmassenteil kann mit dem Flanschteil des Ausgangsteils vernietet sein. Das Pendelmassenträgerteil kann mit dem Schwungmassenteil fest verbunden sein. Das Pendelmassenträgerteil kann mit dem Schwungmassenteil vernietet sein. Das Pendelmassenträgerteil kann zusammen mit dem Ausgangsteil um die Drehachse drehbar sein. Das Pendelmassenträgerteil kann eine flanschartige Form aufweisen. Das Pendelmassenträgerteil kann eine doppelflanschartige Form mit zwei in Richtung der Drehachse voneinander beabstandeten Flanschabschnitten aufweisen. An dem Pendelmassenträgerteil kann wenigstens eine unter Fliehkrafteinwirkung relativ zu dem Pendelmassenträgerteil verlagerbare Pendelmasse angeordnet sein. Die wenigstens eine Pendelmasse kann entlang einer vorgegebenen Bahn verlagerbar sein. Die wenigstens eine Pendelmasse kann zwischen einer ersten Endposition und einer zweiten Endposition verlagerbar sein. Die wenigstens eine Pendelmasse kann mithilfe von Pendelrollen verlagerbar an dem Pendelmassenträgerteil angeordnet sein. Die wenigstens eine Pendelmasse und/oder das Pendelmassenträgerteil kann Pendelrollenbahnen aufweisen, in denen die Pendelrollen angeordnet sind. Die wenigstens eine Pendelmasse kann zwischen den zwei Flanschabschnitten des Pendelmassenträgerteils angeordnet sein.

Die Reibeinrichtung kann eine Reibsteuerscheibe aufweisen, die mit dem Eingangsteil reibschlüssig verbunden und mit dem Pendelmassenträgerteil formschlüssig verbindbar ist. Die Reibsteuerscheibe kann wenigstens eine mit dem Eingangsteil reibend korrespondierende Reibfläche aufweisen. Die Reibsteuerscheibe kann einteilig ausgebildet sein. Die Reibsteuerscheibe kann mehrteilig ausgebildet sein. Mehrere Reibsteuerscheibenteile können mithilfe eines Trägerelements miteinander verbunden sein. Die Reibsteuerscheibe oder Reibsteuerscheibenteile können ein Reibmaterial aufweisen. Das Reibmaterial kann ein Kunststoff sein. Das Reibmaterial kann flexibel, kautschukharzgebunden, elastomerkunstharzgebunden, spritzgegossen und/oder metallfrei sein. Das Trägerelement kann ein Blechteil sein. Das Trägerelement kann Durchbrüche aufweisen, in denen die Reibsteuerscheibenteile aufgenommen sind. Damit kann die Reibsteuerscheibe von dem Pendelmassenträgerteil formschlüssig mitgenommen werden und es kann eine reibende Relativbewegung zwischen der Reibsteuerscheibe und dem Eingangsteil erfolgen. Es wird Reibmaterial eingespart. Mit dem Trägerblech wird eine Montage der Reibelemente erleichtert.

Das Eingangsteil kann ein Flanschteil und ein Deckelteil aufweisen und die Reibsteuerscheibe kann mit dem Deckelteil reibschlüssig verbunden sein. Das Flanschteil kann zur Antriebsverbindung der Drehmomentübertragungseinrichtung mit der Brennkraftmaschine dienen. Das Deckelteil kann mit dem Flanschteil fest verbunden sein. Das Deckelteil kann mit dem Flanschteil stoffschlüssig verbunden sein. Das Deckelteil kann mit dem Flanschteil verschweißt sein. Das Deckelteil kann in Richtung der Drehachse betrachtet zwischen dem Flanschteil und dem Pendelmassenträgerteil angeordnet sein. Das Deckelteil kann eine mit der Reibsteuerscheibe reibend korrespondierende Reibfläche aufweisen. Die Reibfläche des Deckelteils kann dem Pendelmassenträgerteil zugewandt sein. Die Reibfläche des Deckelteils kann von dem Pendelmassenträgerteil abgewandt sein. Ein Reibschluss zwischen Reibsteuerscheibe und Deckelteil kann in einer zur Drehachse senkrechten Ebene erfolgen. Die Reibsteuerscheibe kann mit dem Flanschteil reibschlüssig verbunden sein. Ein Reibschluss zwischen Reibsteuerscheibe und Flanschteil kann in einer zur Drehachse parallelen Ebene erfolgen.

Die Reibeinrichtung kann eine Reibsteuerscheibe aufweisen, die mit dem Eingangsteil formschlüssig verbindbar und mit dem Pendelmassenträgerteil reibschlüssig verbunden ist. Das Pendelmassenträgerteil kann in Richtung der Drehachse betrachtet zwischen dem Eingangsteil und dem Schwungmassenteil des Ausgangsteils angeordnet sein. Das Pendelmassenträgerteil kann eine mit der Reibsteuerscheibe reibend korrespondierende Reibfläche aufweisen. Die Reibfläche des Pendelmassenträgerteils kann dem Eingangsteil zugewandt sein.

Damit kann die Reibsteuerscheibe von dem Eingangsteil formschlüssig mitgenommen werden und es kann eine reibende Relativbewegung zwischen der Reibsteuerscheibe und dem Pendelmassenträgerteil erfolgen. Das Eingangsteil kann ein Flanschteil und ein Deckelteil aufweisen und die Reibsteuerscheibe kann mit dem Deckelteil formschlüssig verbindbar sein.

Das Deckelteil kann einen radial außerhalb des wenigstens einen Energiespeichers angeordnet Flanschabschnitt aufweisen und die Reibeinrichtung kann an dem Flanschabschnitt angeordnet sein. Das Deckelteil kann einen Verbindungsabschnitt zur Verbindung mit dem Flanschteil des Eingangsteils aufweisen. Der Verbindungsabschnitt des Deckelteils kann radial innerhalb des Flanschabschnitts angeordnet sein. Das Deckelteil kann zusammen mit dem Flanschteil des Eingangsteils einen Aufnahmeraum für den wenigstens einen Energiespeicher begrenzen. Der Aufnahmeraum kann eine torusartige Form aufweisen. Der Aufnahmeraum kann radial innerhalb des Flanschabschnitts angeordnet sein. Der Aufnahmeraum kann radial innerhalb des Verbindungsabschnitts des Deckelteils angeordnet sein. Die Reibeinrichtung kann mit dem Flanschabschnitt reibschlüssig korrespondieren.

Zur formschlüssigen Verbindung der Reibsteuerscheibe können erste Anschlagabschnitte, die in einer ersten Drehrichtung wirksam sind, und zweite Anschlagabschnitte, die in einer zweiten Drehrichtung wirksam sind, vorgesehen sein und die Reibsteuerscheibe kann mit den Anschlagabschnitten korrespondierende Mitnahmeabschnitte aufweisen. In der ersten Drehrichtung können die Mitnahmeabschnitte an den ersten Anschlagabschnitten anliegen. In der zweiten Drehrichtung können die Mitnahmeabschnitte an den zweiten Anschlagabschnitten anliegen. Die Mitnahmeabschnitte können in Umfangsrichtung der Reibsteuerscheibe an den Anschlagabschnitten anliegen. Damit sind in jeder Drehrichtung unterschiedliche Anschlagabschnitte wirksam. Die Anschlagabschnitte können mit Ausnehmungen gebildet sein. Die Ausnehmungen können Randabschnitte aufweisen. Die Randabschnitte können die Anschlagabschnitte bilden. Die Mitnahmeabschnitte können mit Fortsätzen gebildet sein. Die Fortsätze können in den Ausnehmungen aufgenommen sein. Die Fortsätze können sich in Richtung der Drehachse in die Ausnehmungen hinein erstrecken. Die Reibsteuerscheibe kann mehrere in Umfangsrichtung verteilt angeordnete Mitnahmeabschnitte aufweisen. Die Reibsteuerscheibe kann mehrere in Umfangsrichtung verteilt angeordnete Fortsätze aufweisen. Die Fortsätze können in Umfangsrichtung gleichmäßig verteilt angeordnet sein.

Bei einer andern Ausführung kann die Reibsteuerscheibe zur formschlüssigen Verbindung die Anschlagabschnitte aufweisen und das Pendelmassenträgerteil kann die Mitnahmeabschnitte aufweisen. Die Mitnahmeabschnitte können Nietköpfe einer Vernietung des Pendelmassenträgerteils sein.

Die Anschlagabschnitte können von den Mitnahmeabschnitten derart beabstandet sein, dass eine drehrichtungsabhängige Hysterese erzeugt ist. Die Anschlagabschnitte können von den Mitnahmeabschnitten in Umfangsrichtung der Reibsteuerscheibe beabstandet sein. Die Reibsteuerscheibe kann langlochartige Ausnehmungen aufweisen. Die Reibsteuerscheibe kann mehrere in Umfangsrichtung verteilt angeordnete Ausnehmungen aufweisen. Die Ausnehmungen können sich jeweils in Umfangsrichtung der Reibsteuerscheibe erstrecken. Die Ausnehmungen können eine dem Umfang der Reibsteuerscheibe entsprechend gebogene Form aufweisen. Die Ausnehmungen können jeweils einen ersten Anschlagabschnitt und einen zweiten Anschlagabschnitt aufweisen. Die Ausnehmungen können jeweils einen ersten Endabschnitt und einen zweiten Endabschnitt aufweisen. Die ersten Endabschnitte der Ausnehmungen können die ersten Anschlagabschnitte bilden. Die zweiten Endabschnitte der Ausnehmungen können die zweiten Anschlagabschnitte bilden. Die Ausnehmungen können in Mitnahmerichtung größer sein, als die Mitnahmeabschnitte. Die Mitnahmeabschnitte können in den Ausnehmungen geführt sein. Die Länge der Ausnehmungen in Mitnahmerichtung kann einen vorgegebenen Freiwinkel bestimmen. Ein "Freiwinkel" ist ein maximaler Winkelbereich, über den das Eingangsteil und das Ausgangsteil bei einem Drehrichtungswechsel relativ zueinander verdreht werden können, ohne dass eine Mitnahme zwischen den Anschlagabschnitten und den Mitnahmeabschnitten und damit eine Reibung an der Reibsteuerscheibe erfolgt.

Die Reibeinrichtung kann eine Federeinrichtung zur Beaufschlagung der Reibsteuerscheibe aufweisen und die Federeinrichtung kann mit der Reibsteuerscheibe in unmittelbarem Reibkontakt stehen. Mit der Federeinrichtung kann eine Kraft oder Kraftkomponente in Richtung der Drehachse aufgebracht werden. Mit der Federeinrichtung kann eine Normalkraft zur Erzeugung einer Reibkraft auf die Reibeinrichtung aufgebracht werden. Die Federeinrichtung kann eine Tellerfeder aufweisen. Die Federeinrichtung kann ein Stützblech bilden. Die Federeinrichtung kann eine Doppelfunktion erfüllen. Ein gesondertes Stützblech kann entfallen. Ein "Stützblech" ist in diesem Zusammenhang insbesondere ein in Richtung der Drehachse verlagerbares und relativ zur Reibsteuerscheibe drehbares Element, das zur Übertragung einer Anpresskraft auf die Reibsteuerscheibe dient. Das Stützblech kann drehfest mit dem Eingangsteil oder mit dem Pendelmassenträgerteil verbunden sein.

Die Reibsteuerscheibe kann das Pendelmassenträgerteil derart abdecken, dass die Pendelrollen fixiert sind. Damit kann eine gesonderte Lagesicherung für die Pendelrollen entfallen.

Zusammenfassend und mit anderen Worten dargestellt ergibt sich somit durch die Erfindung unter anderem eine Reibeinrichtung für ein Zweimassenschwungrad mit Fliehkraftpendel, bei dem die Reibeinrichtung radial über einem Bogenfederkanal angebracht ist. Die Reibeinrichtung kann zwischen einem Deckel und Primärmassenscheibe montiert sein. Eine Betätigung der Reibeinrichtung kann durch ein Langloch auf einem Fliehkraftpendelflansch stattfinden. Die Breite dieses Langloch kann einen Reibsteuerscheibenfreiwinkel bestimmen. Aufgrund der radiale Lage (weit außen), kann eine axiale Tellerfederkraft reduziert werden und somit die Flächenpressung auf die Reibsteuerscheibe und ein günstiger Werkstoff kann für Reibsteuerscheibe benutzt werden.

Die Reibeinrichtung kann auf den Fliehkraftpendelflansch montiert werden. In dem Fall kann die Reibsteuerscheibe durch eine Aussparung im Deckel betätigt werden. Die Tellerfeder zum Eintrag der axialen Kraft in die Reibsteuerscheibe kann auch als Stützblech benutzt werden. Um zu verhindern, dass Zylinderrollen vom Fliehkraftpendel herausfallen, kann die Reibsteuerscheibe über Rollenbahnen gelegt werden. Die Reibsteuerscheibe kann in mehrere Einzelteile geteilt sein, um Kunststoff zu sparen. Um die Positionierung der verschiedenen Einzelelemente während der Montage zu vereinfachen, können diese in ein Trägerblech montiert werden. Die Reibeinrichtung kann auf den Deckel mit mehreren Warzen am Umfang vernietet werden. Somit kann das Stecken von zusätzlichen Nieten während der Montage vermieden werden. Die Reibsteuerscheibe kann auf einer Deckelseite montiert sein. Die Reibsteuerscheibe kann in mehrere Einzelelemente geteilt werden und in ein Trägerblech montiert werden. Dieses Blech kann als Betätigung der Reibeinrichtung durch zusätzliche Laschen am Umfang dienen. Die Tellerfeder kann auch als Deckscheibe dienen, um eine zweite Reibfläche zu erzeugen. Die Tellerfeder kann als Deckscheibe dienen. Der Kontakt am Außendurchmesser der Reibsteuerscheibe und am Deckel kann eine zusätzlich Reibfläche darstellen. Dadurch kann auch unter Fliehkraft vermieden werden, dass sich die Reibsteuerscheibe zu stark aufweitet. Mehrere Nasen an der Reibsteuerscheibe können durch eine Aussparung im Deckel in ein Langloch im Fliehkraftpendelflansch gehen und somit die Betätigung der Reibeinrichtung erlauben. Die Reibsteuerscheibe kann durch den Schließkopf einer Vernietung Fliehkraftpendel/Sekundärschwungscheibe betätigt werden.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:

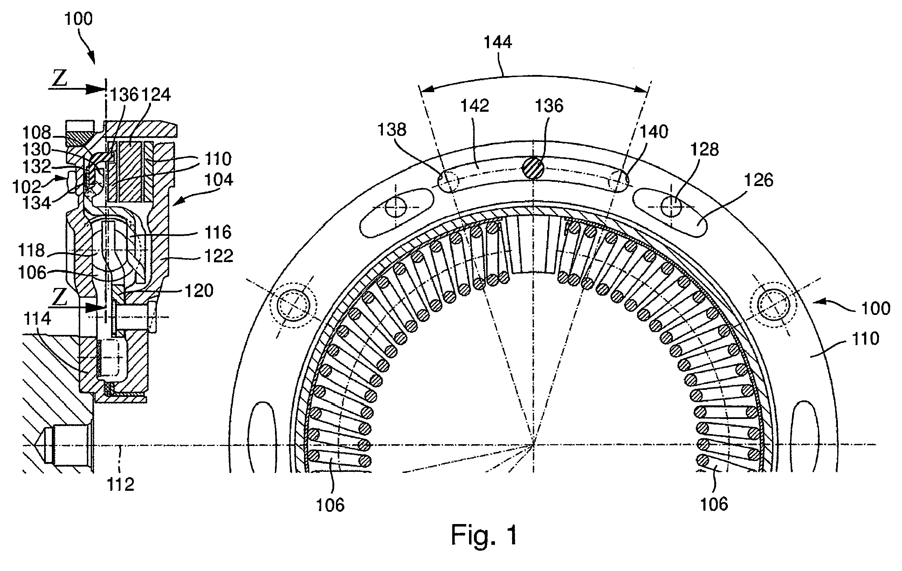

- Fig. 1: zwei Schnittdarstellungen eines Zweimassenschwungrads mit einem Eingangsteil, einem Ausgangsteil, einer Feder-Dämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem die Reibsteuerscheibe mit dem Eingangsteil reibschlüssig verbunden und mit dem Pendelmassenträgerteil formschlüssig verbindbar ist,

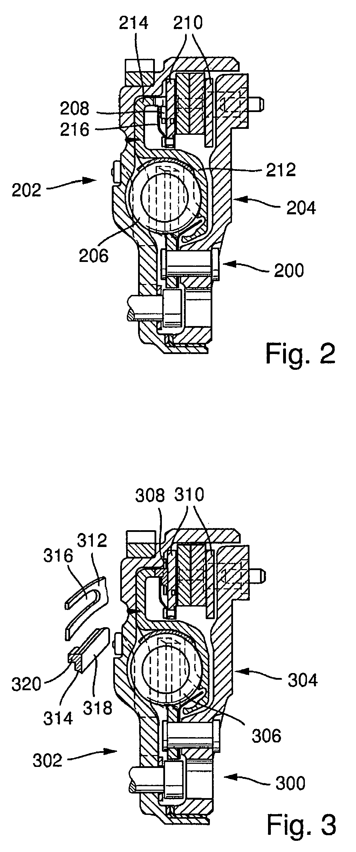

- Fig. 2: ein Zweimassenschwungrad mit einem Eingangsteil, einem Ausgangsteil, einer Feder-Dämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem die Reibsteuerscheibe mit dem Eingangsteil formschlüssig verbindbar und mit dem Pendelmassenträgerteil reibschlüssig verbunden ist, in Schnittdarstellung,
- Fig. 3: ein Zweimassenschwungrad mit einem Eingangsteil, einem Ausgangsteil, einer Feder-Dämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem die Reibsteuerscheibe als Trägerblech mit Reibelementen ausgebildet ist, in Schnittdarstellung,

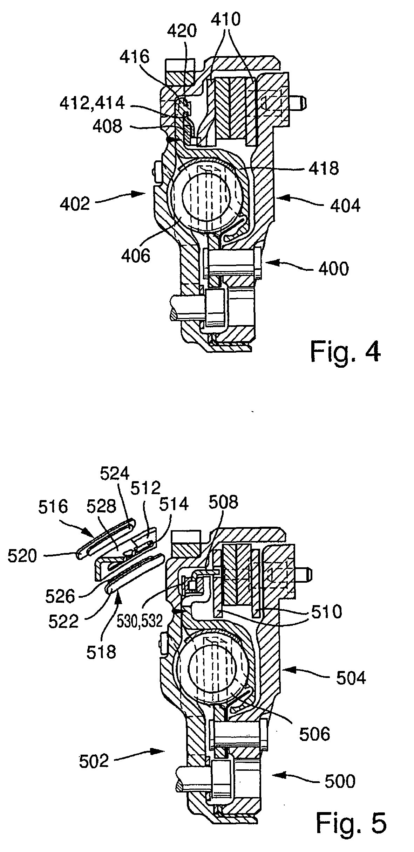

- Fig. 4: ein Zweimassenschwungrad mit einem Eingangsteil, einem Ausgangsteil, einer Feder-Dämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem die Reibsteuerscheibe mit einer mit dem Eingangsteil vernieteten Tellerfeder gehalten ist, in Schnittdarstellung,
- Fig. 5: ein Zweimassenschwungrad mit einem Eingangsteil, einem Ausgangsteil, einer FederDämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem die Reibsteuerscheibe als Trägerblech mit zweiseitig wirksamen Reibelementen ausgebildet ist, in Schnittdarstellung,

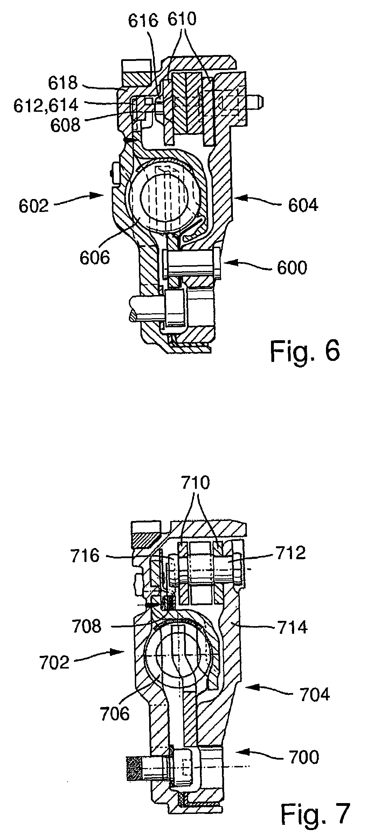

- Fig. 6: ein Zweimassenschwungrad mit einem Eingangsteil, einem Ausgangsteil, einer FederDämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem eine Tellerfeder als Stützblech dient, in Schnittdarstellung und
- Fig. 7: ein Zweimassenschwungrad mit einem Eingangsteil, einem Ausgangsteil, einer FederDämpfer-Einrichtung mit Bogenfedern und einer radial außerhalb der Bogenfedern angeordneten Reibeinrichtung mit einer Reibsteuerscheibe und einer Fliehkraftpendeleinrichtung mit einem Pendelmassenträgerteil, bei dem eine formschlüssige Verbindung zwischen Reibsteuerscheibe und Pendelmassenträgerteil mithilfe von Nieten erfolgt, in Schnittdarstellung.

Fig. 1 zeigt zwei Schnittdarstellungen eines Zweimassenschwungrads 100 mit einem Eingangsteil 102, einem Ausgangsteil 104, einer Feder-Dämpfer-Einrichtung mit Bogenfedern, wie 106, und einer radial außerhalb der Bogenfedern 106 angeordneten Reibeinrichtung mit einer Reibsteuerscheibe 108 und einer Fliehkraftpendeleinrichtung mit einem Pendelmassenträgerteil 110, bei dem die Reibsteuerscheibe 108 mit dem Eingangsteil 102 reibschlüssig verbunden und mit dem Pendelmassenträgerteil 110 formschlüssig verbindbar ist. In Fig. 1 ist links eine Schnittdarstellung entlang der Drehachse 112 des Zweimassenschwungrads 100 gezeigt. Rechts ist eine Schnittdarstellung entlang der Linie Z-Z gezeigt.

Das Zweimassenschwungrad 100 ist ein Beispiel für eine Drehmomentübertragungseinrichtung. Das Zweimassenschwungrad 100 ist ein Drehschwingungsdämpfer. Das Zweimassenschwungrad 100 dient zur Dämpfung von Drehschwingungen in einem hier nicht näher dargestellten Antriebsstrang eines brennkraftmaschinengetriebenen Kraftfahrzeugs. Derartige Drehschwingungen werden insbesondere durch periodisch ablaufende Verbrennungsvorgänge in der Brennkraftmaschine und damit einhergehender Drehungleichförmigkeit verursacht.

Das Eingangsteil 102 des Zweimassenschwungrads 100 kann mit einer Ausgangswelle der Brennkraftmaschine, insbesondere mit einer Kurbelwelle, drehmomentübertragend verbunden werden. Das Ausgangsteil 104 des Zweimassenschwungrads 100 kann mit einem Eingangsteil einer Reibungskupplung drehmomentübertragend verbunden werden. Das Eingangsteil 102 und das Ausgangsteil 104 sind zusammen um die gemeinsame Drehachse 112 drehbar. Das Eingangsteil 102 und das Ausgangsteil 104 sind relativ zueinander um die Drehachse 112 begrenzt verdrehbar.

Das Eingangsteil 102 weist ein Flanschteil 114 und ein Deckelteil 116 auf. Das Flanschteil 114 und das Deckelteil 116 sind miteinander fest verbunden, vorliegend verschweißt. Das Flanschteil 114 und das Deckelteil 116 umschließen einen torusartig geformten Aufnahmeraum 118. Das Ausgangsteil 104 weist ein Flanschteil 120 auf. Mit dem Flanschteil 120 ist ein Schwungmassenteil 122 fest verbunden, vorliegend vernietet. Das Schwungmassenteil 122 des Ausgangsteils 104 ist an dem Flanschteil 114 des Eingangsteils 102 verdrehbar gelagert. Mit dem Schwungmassenteil 122 ist das Pendelmassenträgerteil 110 der Fliehkraftpendeleinrichtung fest verbunden, beispielsweise vernietet. Das Pendelmassenträgerteil 110 ist doppelflanschartig mit zwei in Richtung der Drehachse 112 betrachtet beabstandet nebeneinander angeordneten Flanschabschnitten ausgebildet. Zwischen den Flanschabschnitten des Pendelmassenträgerteils 110 sind Pendelmassen, wie 124, angeordnet.

Die Pendelmassen 124 sind an dem Pendelmassenträgerteil 110 relativ zu dem Pendelmassenträgerteil 110 verlagerbar angeordnet. Die Pendelmassen 124 sind verschwenkbar. Die Pendelmassen 124 sind an dem Pendelmassenträgerteil 110 von der Drehachse 112 beabstandet angeordnet. Die Pendelmassen 124 sind entlang einer vorgegebenen Bahn zwischen zwei Endpositionen verlagerbar. Vorliegend weist die Fliehkraftpendeleinrichtung drei Pendelmassen 124 auf. Bei einer anderen Ausführung kann die Fliehkraftpendeleinrichtung jedoch auch mehr oder weniger Pendelmassen, beispielsweise zwei oder vier Pendelmassen, aufweisen. Das Pendelmassenträgerteil 110 ist in Richtung der Drehachse 112 betrachtet zwischen dem Deckelteil 116 des Eingangsteils 102 und dem Schwungmassenteil 122 des Ausgangsteils 104 angeordnet.

Das Pendelmassenträgerteil 110 weist Durchbrüche, wie 126, auf, die mit den Durchbrüchen der Pendelmassen 124 korrespondieren. In den Durchbrüchen 126 des Pendelmassenträgerteils 110 und den Durchbrüchen der Pendelmassen sind Pendelrollen, wie 128, angeordnet, mit denen die Pendelmassen 124 entlang eine vorgegebenen Bahn zwischen den zwei Endpositionen verlagerbar gelagert sind.

Zwischen dem Eingangsteil 102 und dem Ausgangsteil 104 ist die Feder-Dämpfer-Einrichtung wirksam. Die Feder-Dämpfer-Einrichtung weist die Bogenfedern 106 auf. Vorliegend sind zwei Bogenfedern 106 vorgesehen, die sich jeweils über einen in etwa halbkreisförmigen Umfangsabschnitt erstrecken. Die Bogenfedern 106 stützen sich einerseits an dem Eingangsteil 102 und andererseits an dem Flanschteil 120 des Ausgangsteils 104 ab.

Das Flanschteil 114 des Eingangsteils 102 weist radial außen einen sich in Richtung der Drehachse 112 erstreckenden Abschnitt auf, der die Fliehkraftpendeleinrichtung radial außenseitig umgreift. Das Deckelteil 116 des Eingangsteils 102 weist radial außenseitig einen Flanschabschnitt 130 auf. Der Flanschabschnitt 130 des Deckelteils 116 ist in Richtung der Drehachse 112 betrachtet von dem Flanschteil 114 des Eingangsteils 102 beabstandet, so dass zwischen dem Flanschteil 114 und dem Flanschabschnitt 130 des Deckelteils 116 ein Aufnahmeraum gebildet ist. In diesem Aufnahmeraum ist die Reibeinrichtung der Feder-Dämpfer-Einrichtung angeordnet.

Die Reibeinrichtung weist die Reibsteuerscheibe 108, ein Stützblech 132 und eine Tellerfeder 134 auf. Das Stützblech 132 ist in Richtung der Drehachse 112 begrenzt verlagerbar. Die Reibsteuerscheibe 108 ist zwischen dem Flanschabschnitt 130 des Deckelteils 116 und dem Stützblech 132 angeordnet. Die Tellerfeder 134 ist zwischen dem Flanschteil 114 und dem Stützblech 132 angeordnet. Die Tellerfeder 134 stützt sich an dem Flanschteil 114 einerseits und an dem Stützblech 132 andererseits ab. Damit ist das Stützblech 132 in Richtung der Reibsteuerscheibe 108 beaufschlagt. Mit der Tellerfeder 134 ist eine Anpresskraft erzeugt, mit der die Reibsteuerscheibe 108 zwischen dem Flanschabschnitt 130 des Deckelteils 116 und dem Stützblech 132 angepresst ist. Die Anpresskraft bewirkt an der Reibsteuerscheibe 108 eine Normalkraft, die unter Einbeziehung eines Reibkoeffizienten eine proportionale Reibkraft bewirkt.

Zu dem Pendelmassenträgerteil 110 hin gerichtet weist die Reibsteuerscheibe 108 Mitnahmeabschnitte, wie 136, auf. Vorliegend weist die Reibsteuerscheibe 108 zwei einander diametral gegenüberliegende Mitnahmeabschnitte 136 auf. Bei einer anderen Ausführung kann die Reibsteuerscheibe 108 jedoch auch mehr oder weniger Mitnahmeabschnitte aufweisen. Beispielsweise kann die Reibsteuerscheibe einen, drei oder vier Mitnahmeabschnitte aufweisen. Vorliegend sind die Mitnahmeabschnitte als Fortsätze mit einem Kreisquerschnitt ausgebildet. Der der Reibsteuerscheibe 108 benachbarte Flanschabschnitt des Pendelmassenträgerteils 110 weist Anlageabschnitte, wie 138, 140, auf. Die Anlageabschnitte 138, 140 sind mit Endabschnitten langlochartiger Ausnehmungen, wie 142, in dem Pendelmassenträgerteil 110 gebildet. Die Ausnehmungen 142 weisen eine dem Umfang der Reibsteuerscheibe 108 entsprechende bogenartige Form auf. Die Ausnehmungen 142 erstrecken sich in Längsrichtung über einen Winkelbereich von ca. 30°-45°, insbesondere von ca. 36°. Die Ausnehmungen 142 weisen eine den Mitnahmeabschnitten 136 in etwa entsprechende Breite auf. Vorliegend weist das Pendelmassenträgerteil 110 zwei einander diametral gegenüberliegende Ausnehmungen 142 auf. Bei einer anderen Ausführung kann das Pendelmassenträgerteil 110 jedoch auch mehr oder weniger Ausnehmungen aufweisen. Beispielsweise kann das Pendelmassenträgerteil eine, drei oder vier Ausnehmungen aufweisen.

Die Mitnahmeabschnitte 136 der Reibsteuerscheibe 108 erstrecken sich in Richtung der Drehachse 112 in die Ausnehmungen 142 des Pendelmassenträgerteils 110 hinein. Die Mitnahmeabschnitte 136 sind in den Ausnehmungen 142 geführt. Drehrichtungsabhängig können die Mitnahmeabschnitte 136 wechselnd an den Anlageabschnitten 138, 140 anschlagen. Damit ist ein Drehwinkelbereich gegeben, in dem das Eingangsteil 102 und das Ausgangsteil 104 relativ zueinander verdrehen können, ohne dass eine Mitnahme der Reibsteuerscheibe 108 erfolgt. Dieser Winkelbereich wird auch als Freiwinkel 144 bezeichnet.

Die Lagerstelle zwischen dem Schwungmassenteil 122 des Ausgangsteils 104 und dem Flanschteil 114 des Eingangsteils 102 ist radial innen, der Drehachse 112 zugewandt, angeordnet. Die Verbindung zwischen dem Flanschteil 120 und dem Schwungmassenteil 122 ist in radialer Richtung nach außen folgend angeordnet. Weiter nach radial außen folgend sind der Aufnahmeraum 118 und die Bogenfedern 106 angeordnet. Noch weiter nach radial außen folgend sind das Flanschteil 114 und das Deckelteil 116 des Eingangsteils 102 miteinander verbunden. Noch weiter nach radial außen folgend sind die Reibeinrichtung und die Fliehkraftpendeleinrichtung angeordnet.

Fig. 2 zeigt ein Zweimassenschwungrad 200 mit einem Eingangsteil 202, einem Ausgangsteil 204, einer Feder-Dämpfer-Einrichtung mit Bogenfedern 206 und einer radial außerhalb der Bogenfedern 206 angeordneten Reibeinrichtung mit einer Reibsteuerscheibe 208 und einer Fliehkraftpendeleinrichtung mit einem Pendelmassenträgerteil 210, bei dem die Reibsteuerscheibe 208 mit dem Eingangsteil 202 formschlüssig verbindbar und mit dem Pendelmassenträgerteil 210 reibschlüssig verbunden ist, in Schnittdarstellung. Das Deckelteil 212 des Eingangsteils 202 weist die Ausnehmungen mit Anschlagabschnitten auf, in die die Mitnahmeabschnitte der Reibsteuerscheibe 208 eingreifen. Der Flanschabschnitt 214 des Deckelteils 212 ist zu dem Pendelmassenträgerteil 210 hin umgebogen. An dem zu dem Pendelmassenträgerteil 210 hin weisenden Rand des Deckelteils 212 sind die Ausnehmungen mit den Anschlagabschnitten angeordnet. Die Tellerfeder 216 ist mit dem dem Eingangsteil 202 zugewandten Flanschabschnitt des Pendelmassenträgerteils 210 verbunden, vorliegend vernietet. Die Tellerfeder 216 erfüllt zugleich die Funktion eines Stützblechs 218. Die Reibsteuerscheibe 208 deckt den dem Eingangsteil 202 zugewandten Flanschabschnitt des Pendelmassenträgerteils 210 derart ab, dass ein Herausfallen der Pendelrollen der Fliehkraftpendeleinrichtung verhindert ist. Die Pendelrollen der Fliehkraftpendeleinrichtung sind mithilfe der Reibsteuerscheibe 208 fixiert. Im Übrigen wird insbesondere auf Fig. 1 und die zugehörige Beschreibung verwiesen.

Fig. 3 zeigt ein Zweimassenschwungrad 300 mit einem Eingangsteil 302, einem Ausgangsteil 304, einer Feder-Dämpfer-Einrichtung mit Bogenfedern 306 und einer radial außerhalb der Bogenfedern 306 angeordneten Reibeinrichtung mit einer Reibsteuerscheibe 308 und einer Fliehkraftpendeleinrichtung mit einem Pendelmassenträgerteil 310, bei dem die Reibsteuerscheibe 308 als Trägerblech 312 mit Reibelementen 314 ausgebildet ist, in Schnittdarstellung. Das Trägerblech 312 weist eine ringscheibenartige Form mit Ausnehmungen, wie 316, auf. In den Ausnehmungen 316 sind die Reibelemente 314 eingesetzt. Die Ausnehmungen 316 weisen eine langlochartige Form auf. Die Reibelemente 314 weisen jeweils einen Reibabschnitt 318 und einen Befestigungsabschnitt 320 auf. Im Übrigen wird insbesondere auf Fig. 1 und die zugehörige Beschreibung verwiesen.

Fig. 4 zeigt ein Zweimassenschwungrad 400 mit einem Eingangsteil 402, einem Ausgangsteil 404, einer Feder-Dämpfer-Einrichtung mit Bogenfedern 406 und einer radial außerhalb der Bogenfedern 406 angeordneten Reibeinrichtung mit einer Reibsteuerscheibe 408 und einer Fliehkraftpendeleinrichtung mit einem Pendelmassenträgerteil 410, bei dem die Reibsteuerscheibe 408 mit einer mit dem Eingangsteil 402 vernieteten Tellerfeder 412 gehalten ist, in Schnittdarstellung. Die Tellerfeder 412 erfüllt zugleich die Funktion eines Stützblechs 414. Die Tellerfeder 412 ist mit dem Flanschabschnitt 416 des Deckelteils 418 des Eingangsteils 402 verbunden, vorliegend vernietet. Die Vernietung ist an dem radial äußeren-Randabschnitt des Flanschabschnitts 416 angeordnet. Zur Vernietung sind an dem Randabschnitt des Flanschabschnitts 416 zu dem Pendelmassenträgerteil 410 hin vorstehende Zapfen 420 angeordnet. Die Zapfen 420 sind Teil des Flanschabschnitts 416. Zur Montage werden die Zapfen 420 in Durchbrüche der Tellerfeder 412 gesteckt und das freie Ende der Zapfen 420 wird plastisch verformt, sodass die Tellerfeder mit dem Flanschabschnitt 416 verbunden ist. Damit können gesonderte Nieten entfallen. Der dem Eingangsteil 402 zugewandte Flanschabschnitt des Pendelmassenträgerteils 410 weist die Ausnehmungen mit den Anschlagabschnitten auf. Im Übrigen wird insbesondere auf Fig. 1 und die zugehörige Beschreibung verwiesen.

Fig. 5 zeigt ein Zweimassenschwungrad 500 mit einem Eingangsteil 502, einem Ausgangsteil 504, einer Feder-Dämpfer-Einrichtung mit Bogenfedern 506 und einer radial außerhalb der Bogenfedern 506 angeordneten Reibeinrichtung mit einer Reibsteuerscheibe 508 und einer Fliehkraftpendeleinrichtung mit einem Pendelmassenträgerteil 510, bei dem die Reibsteuerscheibe 508 als Trägerblech 512 mit zweiseitig wirksamen Reibelementen ausgebildet ist, in Schnittdarstellung. Das Trägerblech 512 weist eine ringscheibenartige Form mit Ausnehmungen, wie 514, auf. In den Ausnehmungen 514 sind die Reibelemente eingesetzt. Die Ausnehmungen 514 weisen eine langlochartige Form auf. Die Reibelemente weisen jeweils zwei Reibelementteile 516, 518 auf. Die Reibelementteile 516, 518 weisen jeweils einen Reibabschnitt 520, 522 und einen Befestigungsabschnitt 524, 526 auf. Zur Montage werden die Reibelementteile 516, 518 an den Ausnehmungen 514 mit ihren Befestigungsabschnitten 524, 526 derart zusammengefügt, dass sie in den Ausnehmungen 514 gehalten sind. Jedes Reibelement weist somit zwei Reibseiten auf. Die Reibsteuerscheibe 508 ist für einen beidseitigen Reibkontakt geeignet. An dem zu dem Eingangsteil 502 hin weisenden Flanschabschnitt des Pendelmassenträgerteils 510 sind die Ausnehmungen mit den Anschlagabschnitten angeordnet. Das Trägerblech 512 weist zu dem Flanschabschnitt des Pendelmassenträgerteils 510 hin gerichtete Fortsätze auf, die die Mitnahmeabschnitte 528 bilden. Die Tellerfeder 530 dient zugleich als Stützblech 532. Im Übrigen wird insbesondere auf Fig. 1 und die zugehörige Beschreibung verwiesen.

Fig. 6 zeigt ein Zweimassenschwungrad 600 mit einem Eingangsteil 602, einem Ausgangsteil 604, einer Feder-Dämpfer-Einrichtung mit Bogenfedern 606 und einer radial außerhalb der Bogenfedern 606 angeordneten Reibeinrichtung mit einer Reibsteuerscheibe 608 und einer Fliehkraftpendeleinrichtung mit einem Pendelmassenträgerteil 610, bei dem eine Tellerfeder 612 als Stützblech 614 dient, in Schnittdarstellung. Der dem Eingangsteil 602 zugewandte Flanschabschnitt des Pendelmassenträgerteils 610 weist die Ausnehmungen mit den Anschlagabschnitten auf. Die Ausnehmungen sind in Richtung des Eingangsteils 602 nasenartig vorstehenden Abschnitten 616 des Pendelmassenträgerteils 610 angeordnet. Die Reibsteuerscheibe 608 steht in radialer Richtung mit dem Flanschteil 618 des Eingangsteils 602 in Reibkontakt. Damit kann eine Aufweitung der Reibsteuerscheibe 608 unter Fliehkrafteinwirkung begrenzt oder verhindert werden. Im Übrigen wird insbesondere auf Fig. 1 und die zugehörige Beschreibung verwiesen.

Fig. 7 zeigt ein Zweimassenschwungrad 700 mit einem Eingangsteil 702, einem Ausgangsteil 704, einer Feder-Dämpfer-Einrichtung mit Bogenfedern 706 und einer radial außerhalb der Bogenfedern 706 angeordneten Reibeinrichtung mit einer Reibsteuerscheibe 708 und einer Fliehkraftpendeleinrichtung mit einem Pendelmassenträgerteil 710, bei dem eine formschlüssige Verbindung zwischen Reibsteuerscheibe 708 und Pendelmassenträgerteil 710 mithilfe von Nieten, wie 712, erfolgt, in Schnittdarstellung. Die Nieten 712 dienen zur Verbindung der Flanschabschnitte des Pendelmassenträgerteils 710 sowie des Pendelmassenträgerteils 710 mit dem Schwungmassenteil 714 des Ausgangsteils 704. Die Nieten 712 weisen jeweils einen zu dem Eingangsteil 702 hin gerichteten Nietkopf 716, wie Schließkopf, auf. Die Nietköpfe 716 bilden die Mitnahmeabschnitte. Die Reibsteuerscheibe 708 weist die Ausnehmungen mit den Anschlagabschnitten auf. Im Übrigen wird insbesondere auf Fig. 1 und die zugehörige Beschreibung verwiesen.

### Bezugszeichenliste

- 100: Zweimassenschwungrad
- 102: Eingangsteil
- 104: Ausgangsteil
- 106: Bogenfeder
- 108: Reibsteuerscheibe
- 110: Pendelmassenträgerteil
- 112: Drehachse
- 114: Flanschteil
- 116: Deckelteil
- 118: Aufnahmeraum
- 120: Flanschteil
- 122: Schwungmassenteil
- 124: Pendelmasse
- 126: Durchbruch
- 128: Pendelrolle
- 130: Flanschabschnitt
- 132: Stützblech
- 134: Tellerfeder
- 136: Mitnahmeabschnitt
- 138: Anlageabschnitt
- 140: Anlageabschnitt
- 142: Ausnehmung
- 144: Freiwinkel

- 200: Zweimassenschwungrad
- 202: Eingangsteil
- 204: Ausgangsteil
- 206: Bogenfeder
- 208: Reibsteuerscheibe
- 210: Pendelmassenträgerteil
- 212: Deckelteil
- 214: Flanschabschnitt
- 216: Tellerfeder
- 218: Stützblech

- 300: Zweimassenschwungrad
- 302: Eingangsteil
- 304: Ausgangsteil
- 306: Bogenfeder
- 308: Reibsteuerscheibe
- 310: Pendelmassenträgerteil
- 312: Trägerblech
- 314: Reibelement
- 316: Ausnehmung
- 318: Reibabschnitt
- 320: Befestigungsabschnitt

- 400: Zweimassenschwungrad
- 402: Eingangsteil
- 404: Ausgangsteil
- 406: Bogenfeder
- 408: Reibsteuerscheibe
- 410: Pendelmassenträgerteil
- 412: Tellerfeder
- 414: Stützblech
- 416: Flanschabschnitt
- 418: Deckelteil
- 420: Zapfen

- 500: Zweimassenschwungrad
- 502: Eingangsteil
- 504: Ausgangsteil
- 506: Bogenfeder
- 508: Reibsteuerscheibe
- 510: Pendelmassenträgerteil
- 512: Trägerblech
- 514: Ausnehmung
- 516: Reibelementteil
- 518: Reibelementteil
- 520: Reibabschnitt
- 522: Reibabschnitt
- 524: Befestigungsabschnitt
- 526: Befestigungsabschnitt
- 528: Mitnahmeabschnitt
- 530: Tellerfeder
- 532: Stützblech

- 600: Zweimassenschwungrad
- 602: Eingangsteil
- 604: Ausgangsteil
- 606: Bogenfeder
- 608: Reibsteuerscheibe
- 610: Pendelmassenträgerteil
- 612: Tellerfeder
- 614: Stützblech
- 616: Abschnitt
- 618: Flanschteil

- 700: Zweimassenschwungrad
- 702: Eingangsteil
- 704: Ausgangsteil
- 706: Bogenfeder
- 708: Reibsteuerscheibe
- 710: Pendelmassenträgerteil
- 712: Niet
- 714: Schwungmassenteil
- 716: Nietkopf

## Patentansprüche

1. Drehmomentübertragungseinrichtung (100, 200, 300, 400, 500, 600, 700), insbesondere für einen Antriebsstrang eines brennkraftmaschinengetriebenen Kraftfahrzeugs, aufweisend ein Eingangsteil (102, 202, 302, 402, 502, 602, 702) und ein Ausgangsteil (104, 204, 304, 404, 504, 604, 704) mit einer gemeinsamen Drehachse (112), um die das Eingangsteil (102, 202, 302, 402, 502, 602, 702) und das Ausgangsteil (104, 204, 304, 404, 504, 604, 704) zusammen drehbar und relativ zueinander begrenzt verdrehbar sind und eine zwischen dem Eingangsteil (102, 202, 302, 402, 502, 602, 702) und dem Ausgangsteil (104, 204, 304, 404, 504, 604, 704) wirksame Feder-Dämpfer-Einrichtung mit wenigstens einem Energiespeicher (106, 206, 306, 406, 506, 606, 706) und einer Reibeinrichtung, wobei die Reibeinrichtung radial außerhalb des wenigstens einen Energiespeichers (106, 206, 306, 406, 506, 606, 706) angeordnet ist, wobei mit dem Ausgangsteil (104, 204, 304, 404, 504, 604, 704) ein Pendelmassenträgerteil (110, 210, 310, 410, 510, 610, 710) einer Fliehkraftpendeleinrichtung drehfest verbunden ist und die Reibeinrichtung zwischen dem Eingangsteil (102, 202, 302, 402, 502, 602, 702) und dem Pendelmassenträgerteil (110, 210, 310, 410, 510, 610, 710) wirksam ist.

2. Drehmomentübertragungseinrichtung (100, 400, 500, 600, 700) nach Anspruch 1, **dadurch gekennzeichnet, dass** die Reibeinrichtung eine Reibsteuerscheibe (108, 408, 508, 608, 708) aufweist, die mit dem Eingangsteil (102, 402, 502, 602, 702) reibschlüssig verbunden und mit dem Pendelmassenträgerteil (110, 410, 510, 610, 710) formschlüssig verbindbar ist.

3. Drehmomentübertragungseinrichtung (100, 400, 500, 600, 700) nach Anspruch 2, **dadurch gekennzeichnet, dass** das Eingangsteil (102, 402, 502, 602, 702) ein Flanschteil (114) und ein Deckelteil (116) aufweist und die Reibsteuerscheibe (108, 408, 508, 608, 708) mit dem Deckelteil (116) reibschlüssig verbunden ist.

4. Drehmomentübertragungseinrichtung (200, 300) nach Anspruch 1, **dadurch gekennzeichnet, dass** die Reibeinrichtung eine Reibsteuerscheibe (208, 308) aufweist, die mit dem Eingangsteil (202, 302) formschlüssig verbindbar und mit dem Pendelmassenträgerteil (210, 310) reibschlüssig verbunden ist.

5. Drehmomentübertragungseinrichtung (200, 300) nach Anspruch 4, **dadurch gekennzeichnet, dass** das Eingangsteil (202, 302) ein Flanschteil und ein Deckelteil (212) aufweist und die Reibsteuerscheibe (208, 308) mit dem Deckelteil (212) formschlüssig verbindbar ist.

6. Drehmomentübertragungseinrichtung (100, 200, 300, 400, 500, 600, 700) nach einem der Ansprüche 3 oder 5, **dadurch gekennzeichnet, dass** das Deckelteil (116, 212) einen radial außerhalb des wenigstens einen Energiespeichers (106, 206, 306, 406, 506, 606, 706) angeordnet Flanschabschnitt (130, 214, 416) aufweist und die Reibeinrichtung an dem Flanschabschnitt (130, 214, 416) angeordnet ist.

7. Drehmomentübertragungseinrichtung (100, 200, 300, 400, 500, 600) nach einem der Ansprüche 2 bis 6, **dadurch gekennzeichnet, dass** zur formschlüssigen Verbindung der Reibsteuerscheibe (108, 208, 308, 408, 508, 608) erste Anschlagabschnitte (138), die in einer ersten Drehrichtung wirksam sind, und zweite Anschlagabschnitte (140), die in einer zweiten Drehrichtung wirksam sind, vorgesehen sind und die Reibsteuerscheibe (108, 208, 308, 408, 508, 608) mit den Anschlagabschnitten (138, 140) korrespondierende Mitnahmeabschnitte (136, 528) aufweist.

8. Drehmomentübertragungseinrichtung (100, 200, 300, 400, 500, 600) nach Anspruch 7, **dadurch gekennzeichnet, dass** die Anschlagabschnitte (138, 140) von den Mitnahmeabschnitten (136, 528) derart beabstandet sind, dass eine drehrichtungsabhängige Hysterese erzeugt ist.

9. Drehmomentübertragungseinrichtung (200, 300, 400, 500, 600) nach einem der Ansprüche 2 bis 8, **dadurch gekennzeichnet, dass** die Reibeinrichtung eine Federeinrichtung (216, 412, 530, 612) zur Beaufschlagung der Reibsteuerscheibe (208, 308, 408, 508, 608) aufweist und die Federeinrichtung (216, 412, 530, 612) mit der Reibsteuerscheibe (208, 308, 408, 508, 608) in unmittelbarem Reibkontakt steht.

## Claims

1. Torque transmission device (100, 200, 300, 400, 500, 600, 700), in particular for a drive train of a motor vehicle which is driven by an internal combustion engine, having an input part (102, 202, 302, 402, 502, 602, 702) and an output part (104, 204, 304, 404, 504, 604, 704) with a common rotational axis (112), about which the input part (102, 202, 302, 402, 502, 602, 702) and the output part (104, 204, 304, 404, 504, 604, 704) can be rotated together and can be turned relative to one another to a limited extent, and a spring/damper device which is active between the input part (102, 202, 302, 402, 502, 602, 702) and the output part (104, 204, 304, 404, 504, 604, 704) with at least one energy store (106, 206, 306, 406, 506, 606, 706) and a frictional device, the frictional device being arranged radially outside the at least one energy store (106, 206, 306, 406, 506, 606, 706), a pendulum mass carrier part (110, 210, 310, 410, 510, 610, 710) of a centrifugal force pendulum device being connected fixedly to the output part (104, 204, 304, 404, 504, 604, 704) so as to rotate with it, and the frictional device being active between the input part (102, 202, 302, 402, 502, 602, 702) and the pendulum mass carrier part (110, 210, 310, 410, 510, 610, 710).

2. Torque transmission device (100, 400, 500, 600, 700) according to Claim 1, **characterized in that** the frictional device has a frictional control cam (108, 408, 508, 608, 708) which is connected in a frictionally locking manner to the input part (102, 402, 502, 602, 702) and can be connected in a positively locking manner to the pendulum mass carrier part (110, 410, 510, 610, 710).

3. Torque transmission device (100, 400, 500, 600, 700) according to Claim 2, **characterized in that** the input part (102, 402, 502, 602, 702) has a flange part (114) and a cover part (116), and the frictional control cam (108, 408, 508, 608, 708) is connected in a frictionally locking manner to the cover part (116).

4. Torque transmission device (200, 300) according to Claim 1, **characterized in that** the frictional device has a frictional control cam (208, 308) which can be connected in a positively locking manner to the input part (202, 302) and is connected in a frictionally locking manner to the pendulum mass carrier part (210, 310).

5. Torque transmission device (200, 300) according to Claim 4, **characterized in that** the input part (202, 302) has a flange part and a cover part (212), and the frictional control cam (208, 308) can be connected in a positively locking manner to the cover part (212).

6. Torque transmission device (100, 200, 300, 400, 500, 600, 700) according to one of Claims 3 or 5, **characterized in that** the cover part (116, 212) has a flange section (130, 214, 416) which is arranged radially outside the at least one energy store (106, 206, 306, 406, 506, 606, 706), and the frictional device is arranged on the flange section (130, 214, 416).

7. Torque transmission device (100, 200, 300, 400, 500, 600) according to one of Claims 2 to 6, **characterized in that** first stop sections (138) which are active in a first rotational direction and second stop sections (140) which are active in a second rotational direction are provided for connecting the frictional control cam (108, 208, 308, 408, 508, 608) in a positively locking manner, and the frictional control cam (108, 208, 308, 408, 508, 608) has driving sections (136, 528) which correspond with the stop sections (138, 140).

8. Torque transmission device (100, 200, 300, 400, 500, 600) according to Claim 7, **characterized in that** the stop sections (138, 140) are spaced apart from the driving sections (136, 528) in such a way that a hysteresis which is dependent on the rotational direction is produced.

9. Torque transmission device (200, 300, 400, 500, 600) according to one of Claims 2 to 8, **characterized in that** the frictional device has a spring device (216, 412, 530, 612) for loading the frictional control cam (208, 308, 408, 508, 608), and the spring device (216, 412, 530, 612) is in direct frictional contact with the frictional control cam (208, 308, 408, 508, 608).

## Revendications

1. Dispositif de transmission de couple (100, 200, 300, 400, 500, 600, 700), en particulier pour une chaîne cinématique d'un véhicule automobile à moteur à combustion interne, présentant une partie d'entrée (102, 202, 302, 402, 502, 602, 702) et une partie de sortie (104, 204, 304, 404, 504, 604, 704) avec un axe de rotation commun (112), autour duquel la partie d'entrée (102, 202, 302, 402, 502, 602, 702) et la partie de sortie (104, 204, 304, 404, 504, 604, 704) peuvent tourner ensemble et peuvent tourner de manière limitée l'une par rapport à l'autre et un dispositif d'amortisseur à ressort agissant entre la partie d'entrée (102, 202, 302, 402, 502, 602, 702) et la partie de sortie (104, 204, 304, 404, 504, 604, 704), avec au moins un accumulateur d'énergie (106, 206, 306, 406, 506, 606, 706) est un dispositif de frottement, le dispositif de frottement étant disposé radialement à l'extérieur de l'au moins un accumulateur d'énergie (106, 206, 306, 406, 506, 606, 706), une partie de support de masse pendulaire (110, 210, 310, 410, 510, 610, 710) d'un dispositif pendulaire à force centrifuge étant connectée de manière solidaire en rotation à la partie de sortie (104, 204, 304, 404, 504, 604, 704), et le dispositif de frottement agissant entre la partie d'entrée (102, 202, 302, 402, 502, 602, 702) et la partie de support de masse pendulaire (110, 210, 310, 410, 510, 610, 710).

2. Dispositif de transmission de couple (100, 400, 500, 600, 700) selon la revendication 1, **caractérisé en ce que** le dispositif de frottement présente un disque de commande de frottement (108, 408, 508, 608, 708), qui est connecté par engagement par liaison de frottement à la partie d'entrée (102, 402, 502, 602, 702) et qui peut être connecté par engagement par correspondance de formes à la partie de support de masse pendulaire (110, 410, 510, 610, 710).

3. Dispositif de transmission de couple (100, 400, 500, 600, 700) selon la revendication 2, **caractérisé en ce que** la partie d'entrée (102, 402, 502, 602, 702) présente une partie de bride (114) et une partie de couvercle (116) et le disque de commande de frottement (108, 408, 508, 608, 708) étant connecté par engagement par friction à la partie de couvercle (116).

4. Dispositif de transmission de couple (200, 300) selon la revendication 1, **caractérisé en ce que** le dispositif de frottement présente un disque de commande de frottement (208, 308) qui peut être connecté par engagement par correspondance de formes à la partie d'entrée (202, 302) et qui est connecté par engagement par friction à la partie de support de masse pendulaire (210, 310).

5. Dispositif de transmission de couple (200, 300) selon la revendication 4, **caractérisé en ce que** la partie d'entrée (202, 302) présente une partie de bride et une partie de couvercle (212) et le disque de commande de frottement (208, 308) peut être connecté par engagement par correspondance de formes à la partie de couvercle (212).

6. Dispositif de transmission de couple (100, 200, 300, 400, 500, 600, 700) selon l'une quelconque des revendications 3 ou 5, **caractérisé en ce que** la partie de couvercle (116, 212) présente une portion de bride (130, 214, 416) disposée radialement à l'extérieur de l'au moins un accumulateur d'énergie (106, 206, 306, 406, 506, 606, 706) et le dispositif de frottement est disposé au niveau de la portion de bride (130, 214, 416).

7. Dispositif de transmission de couple (100, 200, 300, 400, 500, 600) selon l'une quelconque des revendications 2 à 6, **caractérisé en ce que** pour la connexion par engagement par correspondance de formes du disque de commande de frottement (108, 208, 308, 408, 508, 608), on prévoit des premières portions de butée (138) qui agissent dans un premier sens de rotation et des deuxièmes portions de butée (140) qui agissent dans un deuxième sens de rotation et le disque de commande de frottement (108, 208, 308, 408, 508, 608) présente des portions d'entraînement (136, 528) correspondant aux portions de butée (138, 140).

8. Dispositif de transmission de couple (100, 200, 300, 400, 500, 600) selon la revendication 7, **caractérisé en ce que** les portions de butée (138, 140) sont espacées des portions d'entraînement (136, 528) de telle sorte que l'on obtienne une hystérésis dépendant du sens de rotation.

9. Dispositif de transmission de couple (200, 300, 400, 500, 600) selon l'une quelconque des revendications 2 à 8, **caractérisé en ce que** le dispositif de frottement présente un dispositif de ressort (216, 412, 530, 612) pour solliciter le disque de commande de frottement (208, 308, 408, 508, 608) et le dispositif de ressort (216, 412, 530, 612) est en contact de frottement direct avec le disque de commande de frottement (208, 308, 408, 508, 608).
